# EUROPEAN PATENT APPLICATION

(11) **EP 3 621 001 A1**
(43) Date of publication of application: **11.03.2020**
(21) Application number: 19161882.6
(22) Date of filing: 11.03.2019
(51) Int. Cl.: G06Q 10/04

(54) **SOLUTION SEARCHING DEVICE**

(30) Priority: 04.09.2018 JP 2018165076
(71) Applicant: Hitachi, Ltd., Tokyo 100-8280 (JP)
(72) Inventor: Zhu, Yuncheng, Tokyo, 100-8280 (JP); Miyamoto, Hiroki, Tokyo, 100-8280 (JP)
(74) Representative: Manitz Finsterwald Patent- und Rechtsanwaltspartnerschaft mbB

(57) **Abstract**

A solution is calculated using a tree search within a limited calculation time. A solution searching device that performs solution search using a search tree includes a search tree expanding unit that creates a node based on options until a stop condition is satisfied, an evaluation calculation unit that calculates an evaluation value for an leaf node using a first evaluation method, and a search solution determination unit that sequentially updates an evaluation value of an upper node based on an evaluation value of a lower node to determine a search solution.

## Description

### INCORPORATION BY REFERENCE

This application claims priority based on Japanese patent application, No. P2018-165076 filed on September 4, 2018, the entire contents of which are incorporated herein by reference.

### BACKGROUND

The present invention relates to a solution search using a tree search.

The optimization problem is a problem of finding one of the optimal solutions that optimizes one or more objective functions satisfying the constraint condition set. In the research field of artificial intelligence, a method that uses machine learning represented by deep learning is mainstream, but since the constraint conditions and objective functions are frequently changed at work sites, there is a problem that data accumulation for machine learning is difficult or there is a lead time until machine learning completes each time the objective function and/or the constraint conditions change. Therefore, tree search optimization calculation using simulation has been put to practical use.

In the optimization calculation to solve tasks at the work site, in general, the width of the search tree (the number of child nodes of the internal nodes of the tree), which represents the solution space of the optimization problem, is large and the time to acquire the solution is limited. Therefore, it is important not to solve a theoretical optimal solution by spending a huge amount of calculation time but to solve a solution calculated within a specified calculation time with improved accuracy.

As a technique for improving the accuracy of a solution calculated within a limited calculation time, there is a pruning that separates a specific node from a search tree in the middle of the tree search. International Publication No. 2014-115232 discloses a solution searching device in which a simulation is executed from a node, an evaluation value is calculated using an evaluation function based on the result, and a node having an evaluation value that does not satisfy a predetermined criterion is separated from a search tree a pruning unit.

### SUMMARY

However, with the solution searching technique disclosed in International Publication No. 2014-115232, since the accuracy of the solution is affected by the pruning accuracy. Thus, it is necessary to prepare a highly accurate evaluation function for pruning. However, with known techniques, since it has been difficult to create highly accurate evaluation functions, or highly accurate evaluation functions often require complicated calculations and require calculation time, the region of solution space that can be searched for within a limited calculation time has also been narrow.

The present invention has been made in view of the above points, and an object thereof is to calculate a solution using a tree search within a limited calculation time.

Outline of a representative example of the inventions disclosed in the present application will be briefly described as follows.

A solution searching device that performs solution search using a search tree includes a search tree expanding unit that creates a node based on options until a stop condition is satisfied, an evaluation calculation unit that calculates an evaluation value for a leaf node using a first evaluation method, and a search solution determination unit that sequentially updates an evaluation value of an upper node based on an evaluation value of a lower node to determine a search solution.

An optimization exploration system includes a controller that controls an object to be controlled and the above solution searching device that acquires phase information of the object to be controlled from the controller and performs solution search using the search tree based on the phase information.

A solution search method using a search tree executed by a computer system includes one or more storage devices and one or more processors operating in accordance with a program stored in the one or more storage devices. The method includes causing the processor to create a node based on options until a stop condition is satisfied, causing the processor to calculate an evaluation value for a leaf node using a first evaluation method, and causing the processor to sequentially update an evaluation value of an upper node based on an evaluation value of a lower node to determine a search solution.

A program causes a computer to execute a solution search using a search tree. The program causes the computer to create a node based on options until a stop condition is satisfied, to calculate an evaluation value for a leaf node using a first evaluation method, and to sequentially update an evaluation value of an upper node based on an evaluation value of a lower node to determine a search solution.

According to the present invention, it is possible to calculate a solution using a tree search within a limited calculation time.

The problems, constructions and effects other than those mentioned above will be clarified by the description of the following embodiments.

The details of one or more implementations of the subject matter described in the specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a system configuration example according to an embodiment.
FIG. 2 is a configuration example of a solution searching device according to the embodiment.
FIG. 3 is an example of a node evaluation information table of the solution searching device according to the embodiment.
FIG. 4 is an example of a search solution evaluation information table of the solution searching device according to the embodiment.
FIG. 5 is an example of a configuration information table of the solution searching device according to the embodiment.
FIG. 6 is an example of a phase information table of the solution searching device according to the embodiment.
FIG. 7 is an example of a search information table of a solution searching device according to an embodiment.
FIG. 8 is an example of an image of a search tree expanded during optimization calculation by the solution searching device according to the embodiment.
FIG. 9 is an example of a feature value information table of a solution searching device according to the embodiment.
FIG. 10 is an example of a processing flow of a search tree expanding program run by the solution searching device according to the embodiment.
FIG. 11 is an example of a processing flow of an evaluation calculation program run by the solution searching device according to the embodiment.
FIG. 12 is an example of a processing flow of a search solution determination program run by the solution searching device according to the embodiment.

### DETAILED DESCRIPTION OF THE EMBODIMENT

An embodiment of the present invention will be described below with reference to drawings. In the following embodiment, when necessary for convenience, the embodiment is divided into a plurality of sections or embodiments and separately described, but unless otherwise stated, they are not unrelated to each other, and in a relationship in which one section or embodiment is a modification, a detail, or serves as a supplementary description of a part or the whole of another section or embodiment.

In addition, in the following embodiments, when referring to a number related to an element (including number, the numerical value, the amount, the range, and the like), unless otherwise specified and clearly limited to a specific number in principle, the number related to an element is not limited to the specific number, and may be the specific number or more or less. Furthermore, in the following embodiments, the constituent elements (including elementary steps and the like) are not necessarily indispensable except in a case where it is explicitly stated or a case where it is considered to be obviously indispensable in principle.

### Feeding Order Optimization Exploration System

In the present embodiment, a feeding order optimization exploration system includes a solution searching device, an operation device, and a controller, and the solution searching device performs solution search using a search tree based on a phase information acquired from the controller, and determines an item feeding order satisfying the constraint conditions input to the operation device, and presents a control command optimized to the controller. The solution searching device expands the search tree by creating a node based on options until a stop condition is satisfied, calculates evaluation values for leaf nodes using a first evaluation method (first evaluation function), and sequentially updates an evaluation value of an upper node based on an evaluation value of a lower node to determine a search solution.

Further, in the process of determining the search solution, in a case where there are a plurality of child nodes of roods having the highest evaluation value, the solution searching device selects a second evaluation method (second evaluation function) different from the first evaluation method, and updates evaluation values of the plurality of child nodes to determine the search solution. Furthermore, in the process of creating a new node in the process of expanding the search tree, the solution searching device calculates the feature value of the new node, compares the feature value thereof with the feature values of already created nodes, and in a case where there is a node having the same feature value, determines that the node is overlapped, and does not create the new node.

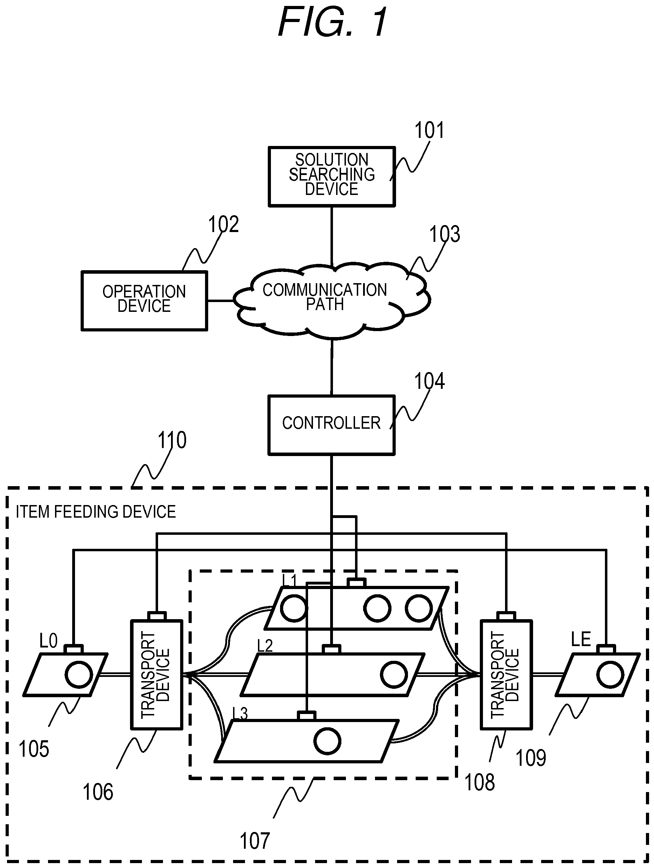

As shown in FIG. 1, the system of the present embodiment includes of a solution searching device 101, an operation device 102, a communication path 103, a controller device 104, and an item feeding device 110 to be controlled. An example of the item feeding device 110 shown in FIG. 1 includes an entrance line 105, an entrance transport device 106, work lines 107, an exit transport device 108, and an exit line 109. The circles (O) in the item feeding device 110 indicates items. While the items pass through the item feeding device 110, the order or time interval feeding of feeding prior to exit lines 109 is adjusted.

In FIG. 1, there is shown an example of an item feeding device in which there is one entrance line 105 and one exit line 109, but there may be a pluralityof entrance or exit lines. Although FIG. 1 shows an example in which a single work line 107 is composed of a plurality of straight lines, the work line 107 may also be composed of a single annular line, or one or a plurality of lines.

The lines may be a work device or a moving device for items serialized by a conveyor or may be a work area where the work or transportation is done on the items by an operator or automatically. Such an item feeding device 110 is utilized at the site of manufacturing work, for example, for adjusting the order of works in progress between processes having different production constraints. Further, in the field of logistics, the item feeding device 110 is used, for example, for goods receipt to and goods issue from an automatic warehouse where items are transported by a transfer robot at the site of logistics work.

The solution searching device 101 determines the item feeding order according to the constraint condition input to the operation device 102 based on the phase information acquired from the controller 104 (that is, item's location information in the item feeding device 110), and provides the controller 104 with the optimized control command. The operation device 102 inputs to the solution searching device 101 a parameter including the constraint condition and configuration information necessary for the optimization calculation.

The communication path 103 is a set of communication devices enabling real-time information exchange between the solution searching device 101, the operation device 102, and the controller 104. The communication path 103 may be a LAN (Local Area Network) that is closed within one site or a WAN (Wide Area Network) that connects multiple bases and areas.

From the item feeding device 110, the controller 104 acquires a status signal, which indicates the status of the items and the item feeding device 110. Based on the status signal, the controller 104 creates the phase information and the operation information of the entrance transport device 106 and the exit transport device 108. The operation information indicates any of a plurality of operating status including an operation status and an instruction wait status. In a case where the controller 104 determines that either the entrance transport device 106 or the exit transport device 108 is in the instruction wait status, the controller 104 transmits the phase information to the solution searching device 101. The controller 104 receives the optimized control command from the solution searching device 101 and transmits a corresponding command signal to the entrance transport device 106 and the exit transport device 108.

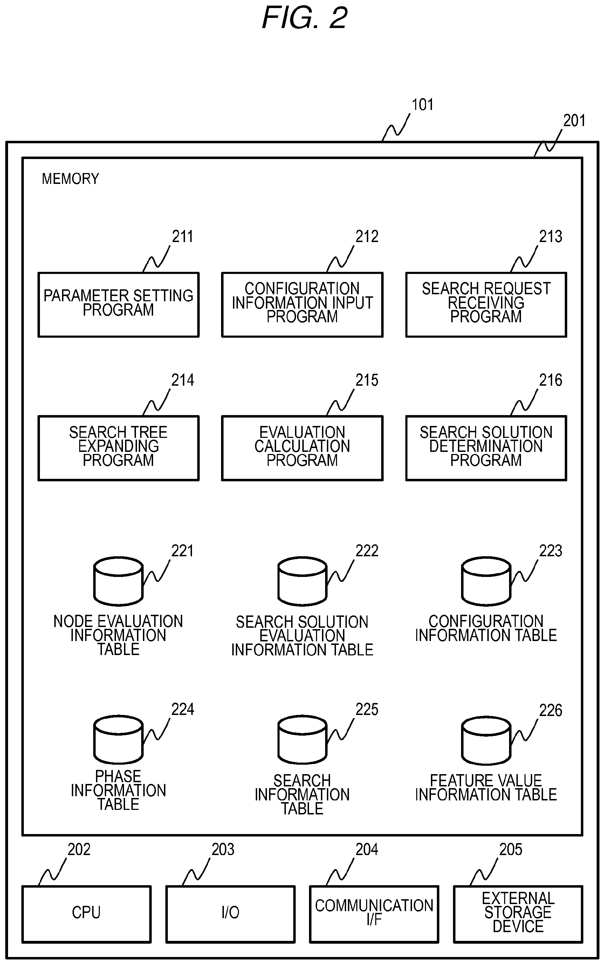

FIG. 2 shows a configuration example of the solution searching device 101 of the present embodiment. The function of the solution searching device 101 in the present embodiment is stored in the form of program software in an external storage device 205 of a general computer, loaded on the memory 201 and executed by the CPU 202 which is a processor. The external storage device 205, the memory 201, and a combination thereof are storage devices and include a storage medium that stores software.
In addition, the solution searching device 101 connects to the communication path 103 via the input/output interface 203, or the communication interface 204, or both.

The memory 201 of the solution searching device 101 stores a parameter setting program 211 for receiving setting parameters from the operation device 102 and a configuration information input program 212 for receiving configuration information from the operation device 102 or controller 104. The memory 201 further stores a search request receiving program 213 that receives a search request from the controller 104 and performs optimization exploration and a search tree expanding program 214 that creates a node based on options until a stop condition is satisfied.

The memory 201 further includes an evaluation calculation program 215 for calculating evaluation values for leaf nodes using a predetermined evaluation function (evaluation method), and a search solution determination program 216 for sequentially updating an evaluation value of an upper node with a predetermined condition (method) and determining a search solution from child nodes of the root node by using a predetermined search solution determination function (search solution determination method).

The memory 201 of the solution searching device 101 further stores a node evaluation information table 221 that stores the parameters of the evaluation function for the leaf node (evaluation method) and stores a search solution evaluation information table 222 that stores the parameters of the search solution determination function (search solution determination method) for the child nodes of the root node. The node evaluation information table 221 shows the constraint condition used to determine the search solution, and the search solution evaluation information table 222 shows the adjustment condition (adjustment parameter) used to determine the search solution.

The memory 201 further stores a configuration information table 223 that stores configuration information of the item feeding device 110 to be controlled and a phase information table 224 that stores phase information of the item feeding device 110 to be controlled. Further, the memory 201 stores a search information table 225 that stores tree search information and a feature value information table 226 that stores feature values of nodes of search tree.

In the solution searching device 101 of the present embodiment, a configuration in which the programs and the above information are stored in a single computer memory is shown. However, it is also possible to adopt a configuration in which the information is stored in an external storage device, the information is read from the external storage device each time the program is processed, and stored in the external storage device each time each processing is completed.

Further, it is also possible to distribute and store the programs and the information in a plurality of computers. For example, each of the information may be implemented as database tables and stored in a database server different from the solution searching device 101, and the program executed on the solution searching device 101 may refer to and update the information on the database server. The above-described difference in the information storage method does not affect the essence of the present invention.

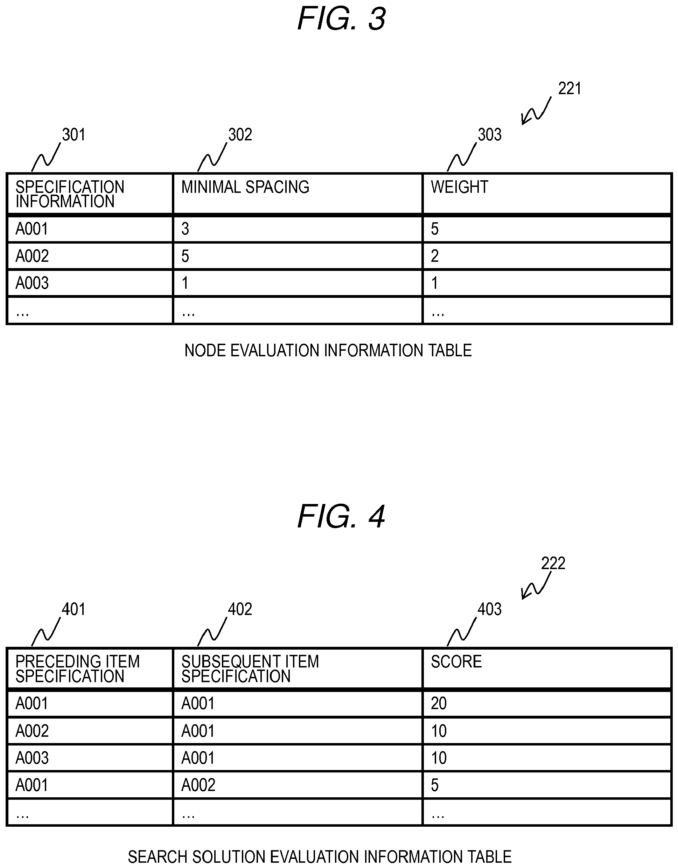

FIG. 3 shows an example of the node evaluation information table 221 held by the solution searching device 101. The node evaluation information table 221 stores information (node evaluation information) for evaluating a node. Specifically, the node evaluation information table 221 stores the parameters of the node's evaluation function (evaluation method) including has specification information 301, minimum spacing 302, and weight 303.

The specification information 301 indicates the specification of the items (an identifier representing an attribute common among the items, also referred to as a machine type, a model number, or a model). The minimum spacing 302 indicates the minimum spacing required for feeding of an item having a specific specification. The weight 303 indicates the weight of the record (entry or row). FIG. 3 shows an example in which the minimum spacing 302 is represented by the number of items between items having a specific specification. The minimum spacing 302 may also be represented by the length of time or space.

FIG. 4 shows an example of the search solution evaluation information table 222 held by the solution searching device 101. The search solution evaluation information table 222 stores information (search solution evaluation information) for evaluating the search solution for the constraint condition (indicated by the node evaluation information table 221). Specifically, the search solution evaluation information table 222 stores the parameters of the search solution determination function (search solution determination method) including a preceding item specification 401 that indicates a specifications of the preceding item and a subsequent item specification 402 that indicates a specification of the subsequent items in adjacent item pairs, and a score 403 indicating the score of the adjacent items pairs.

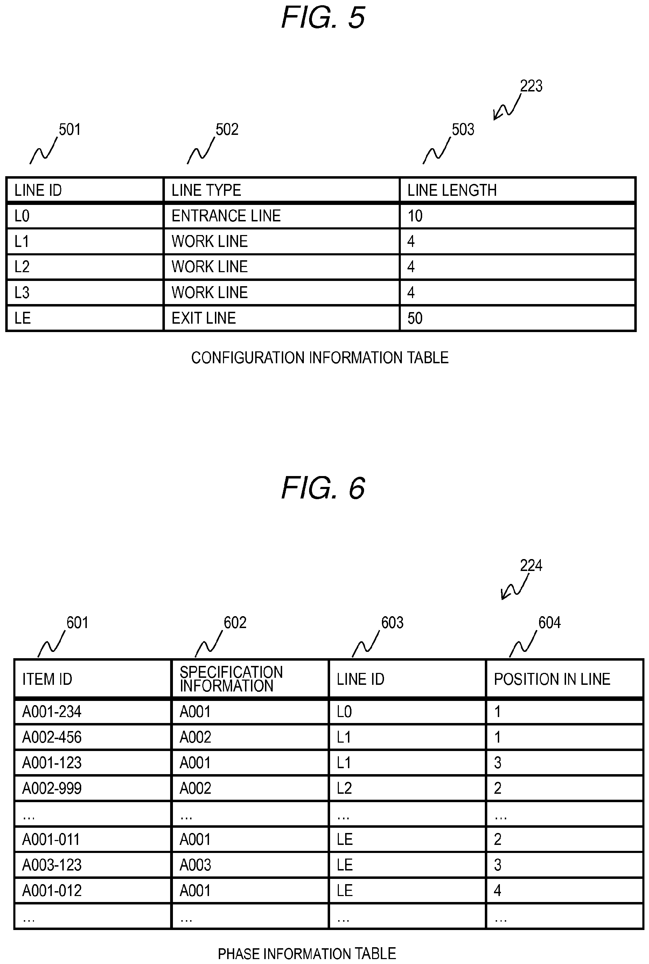

FIG. 5 shows an example of the configuration information table 223 held by the solution searching device 101. In the configuration information table 223, the configuration information table 223 shows the configuration of the item feeding device 110 to be controlled. The configuration information table 223 is composed of a line ID 501 indicating the identifier of the line constituting the item feeding device 110 to be controlled, a line type 502 indicating the type of the line, and a line length 503 indicating the length of the line.

FIG. 5 shows an example in which there are three types of lines, an entrance line, a work line, and an exit line in the line type 502, but other types of lines may also exist. Further, FIG. 5 shows an example in which the maximum value of the number of items present in the line is regarded as the line length 503. In addition, the line length 503 may also be the size in the physical space of the line.

FIG. 6 shows an example of a phase information table 224 held by the solution searching device 101. The phase information includes an item ID 601 indicating the identifier of the item present in the item feeding device 110, specification information 602 showing the specification of the item, a line ID 603 indicating the identifier of the line where the item is present, an in-line position 604 where the item is present in the line.
FIG. 6 shows an example in which the places where an item can exist in the line are fixed and the position 604 in the line is the number of the place. In addition, the position 604 in the line can be the physical coordinates of the position where the item exists.

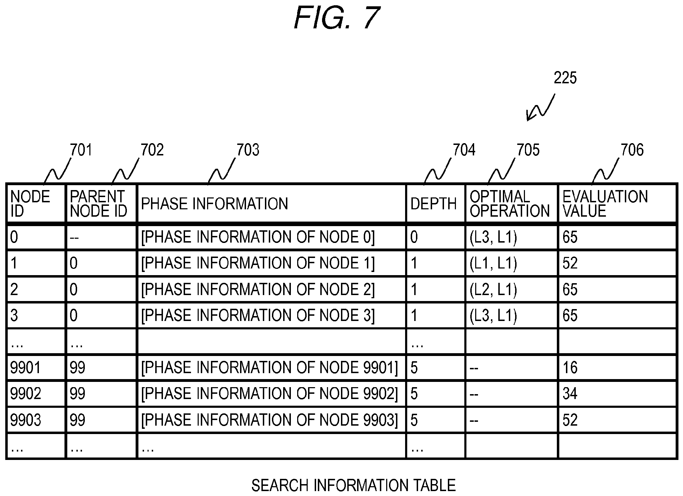

FIG. 7 is an example of the search information table 225 held by the solution searching device 101. The search information table 225 has a node ID 701, a parent node ID 702, phase information 703, a depth 704, an optimal operation 705, and an evaluation value 706. The node ID 701 indicates the identifier of the node in the search tree. The parent node ID 702 indicates the identifier of the parent node in the search tree of the node. The phase information 703 indicates the phase information of the node generated by the simulation of the item feeding device 110.

The depth 704 indicates the number of edges from the node to the root node in the search tree. The optimal operation 705 indicates the optimal operation to select based on the phase of the child node. The evaluation value 706 indicates the evaluation value of the node. The phase information 703 stores information (601 to 604) of the same type as the information stored in the phase information table 224. FIG. 7 shows an example of a combination of the line ID of the destination of the entrance transport device 106 and the line ID of the source of the exit transport device 108 as the optimal operation 705. In addition, the optimal operation 705 may be the operation time of the object to be controlled, or the control signal for the object to be controlled, or both.

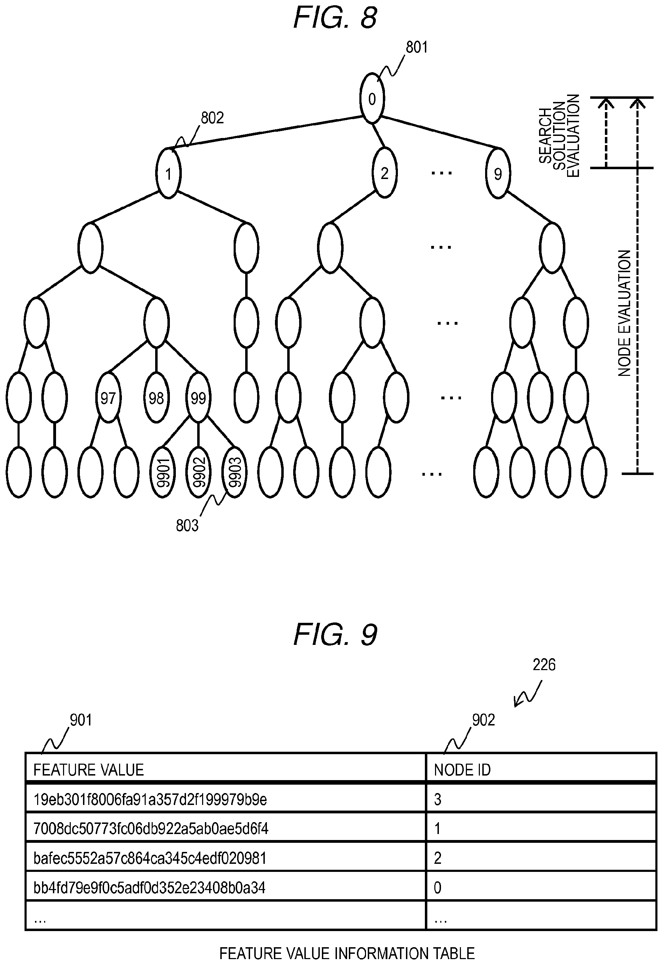

FIG. 8 shows an image of a search tree of search information held in the search information table 225. The search tree in FIG. 8 is composed of a root node 801, a plurality of intermediate nodes 802, and a plurality of leaf nodes 803. In FIG. 8, one intermediate node among a plurality of intermediate nodes is designated by a reference numeral 802, and one leaf node out of a plurality of leaf nodes is indicated by a reference numeral 803. Also, the node IDs 701 of the root node 801, a part of intermediate nodes 802, and a part of leaf nodes 803 are shown as an example.

The nodes of the search tree indicate the phase (state) of the item feeding device 110. The root node indicates the latest (current) phase of the item feeding device 110. The edge of the search tree indicates the action to be performed in the phase of the parent node. The child node indicates a phase of the result when the operation indicated by the edge in the parent node's phase was executed.

FIG. 9 shows an example of the feature value information table 226 held by the solution searching device 101. The feature value information table 226 has a feature value 901 indicating digitized result of the phase information and a node ID 902 indicating the identifier of the node corresponding to the feature value.

The parameter setting program 211 executed by the solution searching device 101 exchanges information with the operation device 102 via the input/output interface 203, the communication interface 204, or both, and acquires parameter information necessary for solution search. Then, the parameter setting program 211 stores the acquired parameter information in the node evaluation information table 221 and the search solution evaluation information table 222, respectively.

The configuration information input program 212 executed by the solution searching device 101 exchanges information with the operation device 102 or the controller 104 via the input/output interface 203, or the communication interface 204, or both, and acquires item feeding device information 110 to be controlled. Then, the configuration information input program 212 stores the acquired configuration information in the configuration information table 223.

The search request receiving program 213 executed by the solution searching device 101 exchanges information with the controller 104 via the input/output interface 203, or the communication interface 204, or both, and receives optimal solution search request including the latest phase information of the item feeding device 110 to be controlled.

The search request receiving program 213 stores the received phase information in the phase information table 224, and then creates a record of the root node in blank search information table 225. The search request receiving program 213 operates the search tree expanding program 214, the evaluation calculation program 215 and the search solution determination program 216 in order, and calculates the control command optimized to determine the item feeding order satisfying the constraint condition. Further, the search request receiving program 213 exchanges information with the controller 104 via the input/output interface 203, or the communication interface 204, or both, and transmits optimized control command to the controller 104.

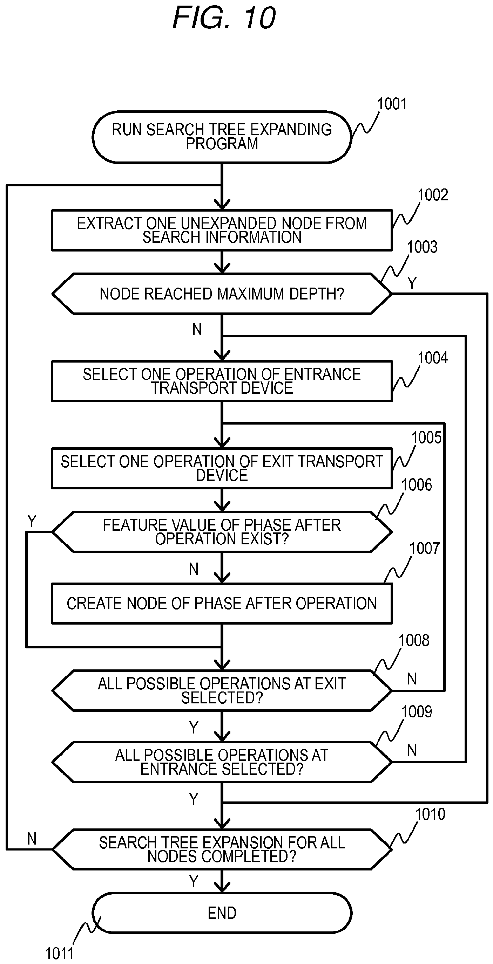

FIG. 10 shows an example of a specific processing flow of the search tree expanding program 214 executed by the solution searching device 101. In step 1001, the solution searching device 101 operates the search tree expanding program 214 with the search request receiving program 213 receiving the optimal solution search request from the controller 104 as a trigger. In step 1002, the solution searching device 101 extracts records of one unexpanded node in order from the search information table 225.

Next, in step 1003, the solution searching device 101 determines whether or not the depth 704 of the extracted record has reached a predetermined maximum depth (stop condition). The condition for stopping the expansion may be determined according to the number of items on the exit line 109 instead of predetermined numerical values.

In a case where the maximum depth has been reached (1003: Y), the solution searching device 101 completes the expansion of the corresponding record and proceeds to step 1010. In a case where the maximum depth has not been reached (1003: N), the solution searching device 101 proceeds to step 1004 and refers to the configuration information table 223 and selects one possible operation of entrance transport device 106. In step 1005, the solution searching device 101 selects one possible operation of the exit transport device 108. The configuration information table 223 indicates possible operations of entrance transport device 106 and exit transport device 108.

Next, in step 1006, the solution searching device 101 simulates a new phase of the item feeding device 110 formed by the selected operation of the entrance transport device 106 and exit transport device 108, and calculates the feature value of the phase. The solution searching device 101 determines whether the feature value of the calculation result exists in the feature value information table 226. As an example of the method of calculating feature value of a phase, there is a method of calculating data of phase information obtained by simulation using a hash function. Examples of known hash functions are MD5 and FNV-1a.

In a case where the feature value of the calculation result exists in the feature value information table 226 (1006: Y), which means that the phase has reached the same phase as the already calculated phase, the solution searching device 101 proceeds to step 1008. In a case where the feature value does not exist in the feature value information table 226 (1006: N), the solution searching device 101 proceeds to step 1007 and creates new node information (record) in the search information table 225 based on the phase information obtained in the simulation.

In the created node information, the node ID 701 is a new identifier, and the parent node ID 702 is the node ID 701 of the record extracted in step 1002. The phase information 703 is phase information obtained by simulation, the value of the depth 704 is obtained by adding 1 to the value of the depth 704 of the extracted record, and the other items are blank. After creating the node information, the solution searching device 101 further stores the feature value of the calculation result and the node ID 701 of the created node information in the feature value information table 226.

In step 1008, the solution searching device 101 determines whether all possible operations of the exit transport device 108 have been selected. In a case where the operation selection has not been completed (1008: N), the solution searching device 101 returns to step 1005 and selects the next possible operation. In a case where the operation selection has been completed (1008: Y), the solution searching device 101 proceeds to step 1009 and determines whether all possible operations of the entrance transport device 106 have been selected.

In a case where the operation selection has not been completed (1009: N), the solution searching device 101 returns to step 1004 and selects the next possible operation. In a case where the operation selection has not been completed (1009: Y), the solution searching device 101 proceeds to step 1010, completes expansion of the corresponding record, and determines whether the search tree expansion of all the nodes has been completed in the search information table 225.

In a case where the search tree expansion has not been completed (1010: N), the solution searching device 101 returns to step 1002 and extracts the next unexpanded node. In a case where the search tree expansion has been completed (1010: Y), the solution searching device 101 proceeds to step 1011, terminates the search tree expanding program 214, and operates the evaluation calculation program 215.

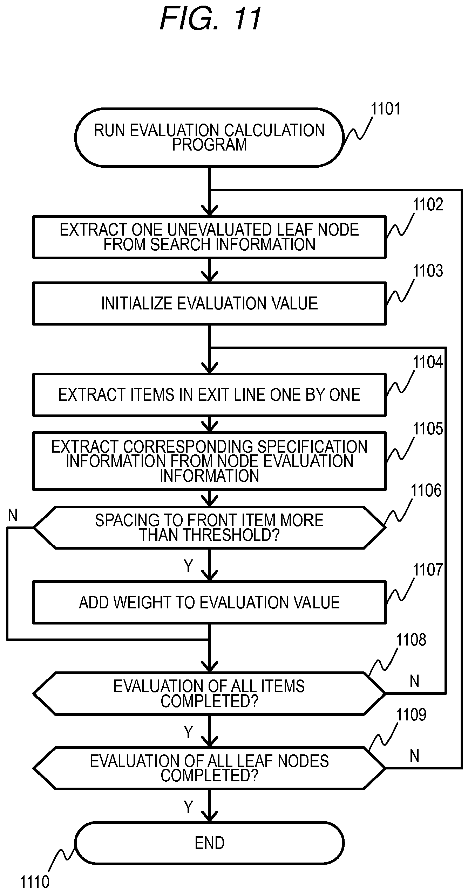

FIG. 11 shows an example of a specific processing flow of the evaluation calculation program 215 executed by the solution searching device 101. In step 1101, the solution searching device 101 operates the evaluation calculation program 215 with the termination of the search tree expanding program 214 as a trigger. In step 1102, the solution searching device 101 sequentially extracts records of unevaluated leaf nodes one by one from the search information table 225.

Next, in step 1103, the solution searching device 101 initializes the evaluation value 706 of the extracted record and sets the evaluation value to 0. In step 1104, based on the phase information 703 of the record, the solution searching device 101 extracts one item in the exit line 109 (the line ID in the phase information 703 is "LE") in order from the front in the transport order. Furthermore, in step 1105, the solution searching device 101 extracts a record corresponding to the specification information of the extracted item from the node evaluation information table 221.

In step 1106, the solution searching device 101 determines whether the spacing from the preceding item in the transport order having the same specification as the extracted item is not less than the minimum spacing 302. In a case where the spacing is equal to or more than the minimum spacing 302 (1106: Y), the solution searching device 101 proceeds to step 1107 and adds the corresponding weight in the node evaluation information table 221 to the evaluation value 706 of the record of the leaf node. In a case where the spacing is less than the minimum spacing 302 (1106: N), the solution searching device 101 proceeds to step 1108.

In step 1108, the solution searching device 101 determines whether evaluation has been completed for all items on the exit line 109. In a case where the evaluation has not been completed (1108: N), the solution searching device 101 returns to step 1104 and extracts the next item. In a case where the evaluation has been completed (1108: Y), the solution searching device proceeds to step 1109. In this manner, the solution searching device 101 evaluates the state on the exit line 109 based on the node evaluation information table 221.

Calculation up to step 1108 will be described with an example of calculation in the case where the items in the exit line are arranged in the order of (A001-011, A003-123, A001-012, ...) in a phase of the leaf node. First, the item "A001-011" is extracted and the corresponding node evaluation information (A001, 3, 5) is extracted. Because the item "A001-011" is the first item, there is no item with the specification of A001 ahead "A001-011" and the spacing is 3 or more, which is the minimum spacing, the evaluation value becomes 5.

Similarly, as a result of the evaluation on "A003-123", 1 is added to the evaluation value so that the evaluation value becomes 6. Next, the item "A001-012" is extracted, but the spacing between the item "A001-011" and the next item "A001-011" having the same specification ahead thereof is 1 and does not satisfy the minimum spacing 3. Therefore, 5 is not added to the evaluation value, and the evaluation value remains 6. In this way, calculations are made up to the last item in the exit line.

In step 1109, the solution searching device 101 determines whether evaluation of all the leaf node records has been completed. In a case where the evaluation of the records has been completed (1109: N), the solution searching device 101 returns to step 1102 and extracts the record of the next leaf node. In a case where the evaluation has not been completed (1109: Y), the solution searching device 101 proceeds to step 1110, terminates the evaluation calculation program 215, and operates the search solution determination program 216.

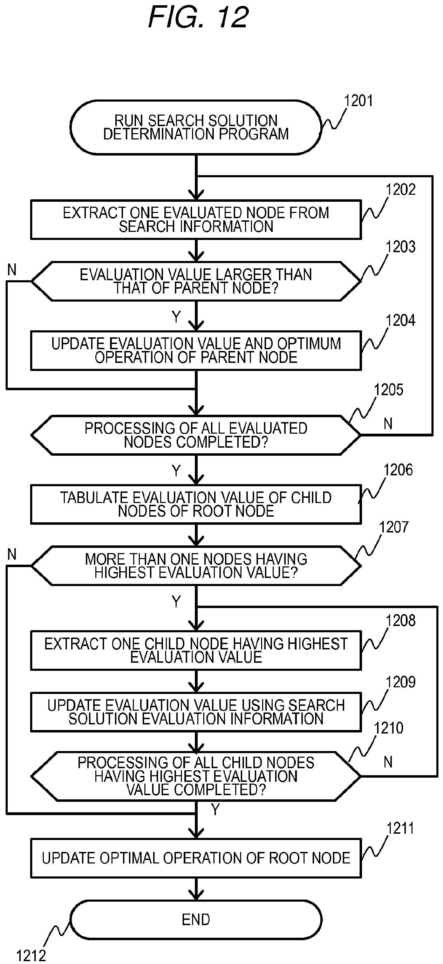

FIG. 12 shows an example of a specific processing flow of the search solution determination program 216 executed by the solution searching device 101. In step 1201, the solution searching device 101 operates the search solution determination program 216 with the termination of the evaluation calculation program 215 as a trigger. In step 1202, the solution searching device 101 extracts a record of one of the evaluated nodes whose evaluation value 706 has been confirmed from the search information table 225. The first node to be selected is the leaf node.

Next, in step 1203, the solution searching device 101 compares the evaluation value 706 of the extracted node with the evaluation value 706 of the parent node of the node, and determines whether the evaluation value of the extracted node is larger than that of the parent node. In a case where the solution searching device 101 selects the parent node for the first time, the solution searching device 101 initializes the node evaluation value 706 setting the evaluation value of the parent node to 0, and then compares the evaluation value with the evaluation value 706 of the extracted node.

In a case where the evaluation value 706 of the extracted node is equal to or less than the evaluation value 706 of the parent node (1203: N), the solution searching device 101 proceeds to step 1205. In a case where the evaluation value 706 of the extracted node (child node) is larger than the evaluation value 706 of the parent node (1203: Y), the solution searching device 101 proceeds to step 1204, updates the evaluation value 706 of the record of the parent node to the evaluation value 706 of the extracted node, and updates the optimal operation 705 of the record of the parent node to the operation that becomes the phase of the extracted node.

Next, in step 1205, the solution searching device 101 determines whether or not the processing of all the evaluated nodes has been completed. In a case where the above processes have not been completed (1205: N), the solution searching device 101 returns to step 1202 and extracts the next node. In a case where the above processes have not been completed (1205: Y), the solution searching device 101 proceeds to step 1206, extracts all records of the child nodes of the root node, and summarizes the evaluation values 706 thereof.

In step 1207, the solution searching device 101 determines whether or not the number of child node having the highest evaluation value in the summarized result of the evaluation values is more than one. In a case where the number of the child nodes is not more than one (1207: N), the solution searching device 101 proceeds to step 1211. In a case where the number of the child node is more than one (1207: Y), the solution searching device 101 proceeds to step 1208 and extracts one record of the child nodes having the highest evaluation value in the evaluation value 706.

Next, in step 1209, the solution searching device 101 updates the evaluation value of the extracted (for child node) record using the information in the search solution evaluation information table 222 In an example of the updating method, the phase information 703 of pairs of items adjacent to each other in the work line 107 are extracted one by one from the phase information 703 of the extracted record, and based on the search solution evaluation information table 222, the score 403 of the extracted pair of items is added to the evaluation value 706.

In this manner, the solution searching device 101 evaluates the state of the work line 107 based on the search solution evaluation information table 222. The work line 107 is a stage prior to the exit line 109 (process in transportation). The search solution evaluation information table 222 gives a higher evaluation to a more preferable state from the viewpoint of the constraint condition on the exit line 109.

Furthermore, in step 1210, the solution searching device 101 determines whether or not processing of all child nodes having the highest evaluation value has been completed. In a case where the processing has not been completed (1210: N), the solution searching device 101 returns to step 1208 and extracts the child node having the next highest evaluation value. In a case where the processing has been completed (1210: Y), the solution searching device 101 proceeds to step 1211 to summarize the evaluation value of the updated child node, and updates the optimal operation 705 of the root node to an operation that becomes the phase of child node of the updated highest evaluation value. Finally, the solution searching device 101 determines the optimal operation 705 of the root node as the determined optimal solution, and proceeds to step 1212 to end the search solution determination program 216.

As described above, in the present embodiment, in the feeding order optimization exploration system including the solution searching device 101, the operation device 102, and the controller 104, the solution searching device 101 performs solution search using the search tree based on the phase information acquired from the controller 104, determines the item feeding order that satisfies the constraint condition (indicated in the node evaluation information table 221) input to the operation device 102, and gives control command optimized to the controller 104.

As described with reference to FIGS. 11 and 12, the solution searching device 101 creates a node by expanding the search tree based on options until the stop condition is satisfied, and uses a predetermined evaluation method (node evaluation information table 221 indicates parameters therefor), calculates the evaluation values for the leaf nodes using the parameter, and sequentially updates the evaluation value of the upper nodes to determine the search solution. As a result, it is possible to calculate a solution using a tree search within a limited calculation time. Since the search tree expansion and solution search are separated, the solution search can be easily adjusted according to the object to be controlled.

In the optimization calculation of the embodiment, in addition to the evaluation function (node evaluation information, FIG. 3) of the leaf nodes of the search tree, another evaluation value (search solution evaluation information, FIG. 4) is also added to those of the child nodes of the root node to determine the search solution. This makes it possible to improve the accuracy of the solution calculated within a limited calculation time even when an evaluation function (evaluation method) with intuitive and low computational complexity is used. By selecting the child nodes having the same highest value and adjusting the evaluation values, it is possible to select an appropriate solution while shortening the specific processing time for the solution.

Also, in creating a new node in the process of expanding the search tree, it is checked whether a new node overlaps already created nodes, and in a case where the new node overlaps one of the already created nodes, the node creation is omitted. This reduces the size of the search tree and leads to an improvement in the accuracy of the solution calculated within a limited calculation time. Furthermore, the feature value of the new node is calculated, compared with the feature values of nodes that have been created, and in a case where there is a node having the same feature value, it is determined that the node is overlapped. As a result, processing time required for overlap checking can be reduced.

The solution search using the search solution evaluation information may be omitted. For example, in a case where there are a plurality of child nodes having the same highest value, one child node may be selected from the plurality of child nodes having the same highest value by a predetermined method. Also, the solution searching device may select the child node of the root node to adjust (update) the evaluation value by a method different from the above example. For example, the evaluation values of all the child nodes of the root node may be adjusted, the child node with the highest evaluation value may be selected, or a predetermined number of child nodes with a high evaluation value may be selected.

In the above embodiment, for example, the evaluation function (node evaluation information, FIG. 3) is the minimum spacing between items having the same specification and another example of the specification between a pair of adjacent items having evaluation values different from each other to which another evaluation value (search solution evaluation information, FIG. 4) is adjacent. However, both of them can be evaluation information tables, and both can be other evaluation means (for example, a specified mathematical function or specified program code). Both may also indicate the minimum spacing between items having the same specification or the specifications of a pair of adjacent items.

The solution search using the search tree of the present embodiment can be applied to a solution search different from the above feeding order optimization exploration. For example, the solution search using the search tree of the present embodiment can be applied to a dispatch system in the logistics industry.

The present invention is not limited to the above-described embodiments, and various modified examples are included. For example, the above-described embodiments have been described in detail in order to explain the present invention in an easy-to-understand manner and are not necessarily limited to those having all the configurations described. Further, a part of the configuration of one embodiment can be replaced with the configuration of another embodiment, and the configuration of another embodiment can be added to the configuration of one embodiment. Further, it is possible to add, delete, and replace other configurations with respect to part of the configuration of each embodiment.

In addition, each of the above-described configurations, functions, processing units, and the like may be realized by hardware, for example, by designing some or all of them with, for example, an integrated circuit. In addition, each of the above-described configurations, functions, and the like may be realized by software with a processor interpreting and executing the program realizing the respective functions. Information such as a program, a table, a file or the like that realizes each function can be stored in a memory, a recording device such as a hard disk, an SSD (Solid State Drive), or a recording medium such as an IC card or an SD card.

Also, control lines and information lines indicate what is considered to be necessary for explanation, and not necessarily all control lines and information lines are always shown on the product. In practice, it may be considered that almost all the structures are mutually connected.

Features described in this specification and the claims shall be deemed combinable with each other also if their combination is not expressly described, to the extent that this combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments shall not be understood as being meant exclusive against each other. Descriptions of a method or procedure or a method step or a procedural step shall be understood also as description of means and/or program instructions of executable code on a data carrier adapted for implementing the method or procedure or method step or procedural step, and vice versa.

Although the present disclosure has been described with reference to example embodiments, those skilled in the art will recognize that various changes and modifications may be made in form and detail without departing from the spirit and scope of the claimed subject matter.

## Claims

1. A solution searching device that performs solution search using a search tree comprising:
a search tree expanding unit that creates a node based on options until a stop condition is satisfied;
an evaluation calculation unit that calculates evaluation values for leaf nodes using a first evaluation method; and
a search solution determination unit that sequentially updates an evaluation value of an upper node based on an evaluation value of a lower node to determine a search solution.

2. The solution searching device according to claim 1,
wherein the search solution determination unit updates an evaluation value of a child node of a root node using a second evaluation method different from the first evaluation method to determine the search solution.

3. The solution searching device according to claim 2,
wherein in a case where evaluation values of a plurality of child nodes of the root node are the highest values, the search solution determination unit updates the evaluation values of the plurality of child nodes using the second evaluation method to determine the search solution.

4. The solution searching device according to any one of claims 2 through 3,
wherein the first evaluation method evaluates a status of a first stage defined by a constraint condition, and
the second evaluation method evaluates a status of a stage prior to the first stage.

5. The solution searching device according to any one of claims 1 through 4,
wherein the search tree expanding unit checks whether a new node overlaps already created nodes, and in a case where the new node overlaps one of the already created nodes, the tree expanding unit omits creation of the new node.

6. The solution searching device according to claim 5,
wherein the search tree expanding unit calculates a feature value of the new node, compares the feature value of the new node with feature values of the already created nodes, and in a case where the feature value of the new node and any one of the feature values of the already created nodes are the same, determines that the new node overlaps one of the already created nodes.

7. An optimization exploration system comprising:
a controller that controls an object to be controlled; and
the solution searching device according to claim 1 that acquires phase information of the object to be controlled from the controller and performs solution search using the search tree based on the phase information.

8. A solution search method using a search tree executed by a computer system including one or more storage devices and one or more processors operating in accordance with a program stored in the one or more storage devices, the method comprising:
causing the processor to create a node based on options until a stop condition is satisfied;
causing the processor to calculate evaluation values for leaf nodes using a first evaluation method; and
causing the processor to sequentially update an evaluation value of an upper node based on an evaluation value of a lower node to determine a search solution.

9. The solution search method according to claim 8,
wherein the processor updates an evaluation value of a child node of a root node using a second evaluation method different from the first evaluation method to determine the search solution.

10. The solution search method according to claim 9,
wherein, in a case where evaluation values of a plurality of the child nodes of the root node are the highest values, the processor updates the evaluation values of the plurality of child nodes using the second evaluation method to determine the search solution.

11. The solution search method according to any one of claims 9 through 10,
wherein the first evaluation method evaluates a status of a first stage defined by a constraint condition, and
the second evaluation method evaluates a status of a stage prior to the first stage.

12. The solution search method according to any one of claims 8 through 11,
wherein the processor checks whether a new node overlap with already created nodes, and in a case where the new node overlaps one of the already created nodes, the processor omits creation of the new node.

13. The solution search method according to claim 12,
wherein the processor calculates a feature value of the new node, compares the feature value of the new node with the feature values of the already created nodes, and in a case where the feature value of the new node and any one of the feature values of the already created nodes are the same, determines that the new node overlaps one of the already created nodes.

## Amended claims

### Amended claims in accordance with Rule 137(2) EPC.

1. A solution searching device (101) for performing solution search using a search tree comprising:
a computer readable memory (212) holding a search information table (225) storing search tree information, **(Discl.: Spec. page 12 lines 22** - **25, page 17 lines 5** - **7, figs. 2, 7,8)**
a search tree expanding unit (214) configured to create a node based on options until a stop condition is satisfied;
an evaluation calculation unit (215) configured to calculate evaluation values for leaf nodes using a first evaluation method; and
a search solution determination unit (216) configured to sequentially update an evaluation value of an upper node based on an evaluation value of a lower node to determine a search solution.

2. The solution searching device according to claim 1,
wherein the search solution determination unit (216) is configured to update an evaluation value of a child node of a root node using a second evaluation method different from the first evaluation method to determine the search solution.

3. The solution searching device according to claim 2,
wherein the search solution determination unit is configured to update, in a case where evaluation values of a plurality of child nodes of the root node are the highest values, the evaluation values of the plurality of child nodes using the second evaluation method to determine the search solution.

4. The solution searching device according to any one of claims 2 through 3,
wherein the evaluation calculation unit (215) is configured to run the first evaluation method for evaluating a status of a first stage defined by a constraint condition, and
the search solution determination unit (216) is configured to run the second evaluation method for evaluating a status of a stage prior to the first stage.

5. The solution searching device according to any one of claims 1 through 4,
wherein the search tree expanding unit (214) is configured to check whether a new node overlaps already created nodes, and in a case where the new node overlaps one of the already created nodes, to omit creation of the new node.

6. The solution searching device according to claim 5,
wherein the search tree expanding unit (214) is configured to calculate a feature value of the new node, to compare the feature value of the new node with feature values of the already created nodes, and in a case where the feature value of the new node and any one of the feature values of the already created nodes are the same, to determine that the new node overlaps one of the already created nodes.

7. An optimization exploration system comprising:
a controller (104) that controls an object to be controlled (110); and
the solution searching device (101) according to claim 1 configured to acquire phase information of the object to be controlled (110) from the controller (104) and to perform solution search using the search tree based on the phase information.

8. A solution search method using a search tree executed by a computer system including one or more storage devices (205, 211 - 216) and one or more processors (202) operating in accordance with a program stored in the one or more storage devices, the method comprising:
causing the processor to create a node based on options until a stop condition is satisfied;
causing the processor to calculate evaluation values for leaf nodes using a first evaluation method; and
causing the processor to sequentially update an evaluation value of an upper node based on an evaluation value of a lower node to determine a search solution.

9. The solution search method according to claim 8,
wherein the processor updates an evaluation value of a child node of a root node using a second evaluation method different from the first evaluation method to determine the search solution.

10. The solution search method according to claim 9,
wherein, in a case where evaluation values of a plurality of the child nodes of the root node are the highest values, the processor updates the evaluation values of the plurality of child nodes using the second evaluation method to determine the search solution.

11. The solution search method according to any one of claims 9 through 10,
wherein the first evaluation method evaluates a status of a first stage defined by a constraint condition, and
the second evaluation method evaluates a status of a stage prior to the first stage.

12. The solution search method according to any one of claims 8 through 11,
wherein the processor checks whether a new node overlap with already created nodes, and in a case where the new node overlaps one of the already created nodes, the processor omits creation of the new node.

13. The solution search method according to claim 12,
wherein the processor calculates a feature value of the new node, compares the feature value of the new node with the feature values of the already created nodes, and in a case where the feature value of the new node and any one of the feature values of the already created nodes are the same, determines that the new node overlaps one of the already created nodes.
